(19) Europäisches Patentamt
European Patent Office
Office européen des brevets

(11) EP 0 591 652 B1

(12) **EUROPÄISCHE PATENTSCHRIFT**

(45) Veröffentlichungstag und Bekanntmachung des Hinweises auf die Patenterteilung:
**06.11.1996 Patentblatt 1996/45**

(51) Int Cl.[6]: **G01S 13/90**

(21) Anmeldenummer: **93112941.5**

(22) Anmeldetag: **12.08.1993**

(54) **Radargerät mit synthetischer Apertur auf der Basis rotierender Antennen**

Synthetic aperture radar based on rotating antennae

Radar à ouverture synthétique à base d'antennes tournantes

(84) Benannte Vertragsstaaten:
**DE FR GB IT NL SE**

(30) Priorität: **05.10.1992 DE 4233416**

(43) Veröffentlichungstag der Anmeldung:
**13.04.1994 Patentblatt 1994/15**

(73) Patentinhaber: **Daimler-Benz Aerospace Aktiengesellschaft**
**81663 München (DE)**

(72) Erfinder: **Klausing, Helmut Dipl.-Ing.-Dr.**
**D-83043 Bad Aibling (DE)**

(56) Entgegenhaltungen:
- **FREQUENZ, Band 45, Nrn. 1/2, Januar/Februar 1991, BERLIN, DE; H. KLAUSING: "Realisierbarkeit eines Radars mit synthetischer Apertur durch rotierende Antennen (Teil I)", Seiten 51-58**
- **FREQUENZ, Band 45, Nrn. 3/4, März/April 1991, BERLIN, DE; H. KLAUSING: "Realisierbarkeit eines Radars mit synthetischer Apertur durch rotierende Antennen (Teil II)", Seiten 73-80**
- **FREQUENZ, Band 45, Nrn. 5/6, Mai/Juni 1991, BERLIN, DE; H. KLAUSING:"Realisierbarkeit eines Radars mit synthetischer Apertur durch rotierende Antennen (Teil III)", Seiten 147-154**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 591 652 B1

**Beschreibung**

**Tiefenschärfeberechnung**

In der DE-PS 39 22 086 (entspricht der EP-A-0 406 522) ist ein Radargerät mit synthetischer Apertur auf der Basis rotierender Antennen (ROSAR-Gerät) bekannt, welches einen Sender und einen Empfänger aufweist, deren zumindest eine Antenne zum Senden und Empfangen von Radarimpulsen am Ende eines rotierenden Armes, z.B. eines Hubschrauberrotors oder eines Drehkreuzes oberhalb der Rotorachse, angeordnet ist. Die Empfangssignale werden demoduliert und zwischengespeichert und anschließend mit Referenzfunktionen korreliert. Diese Referenzfunktionen werden jeweils in Abhängigkeit von der Beleuchtungsgeometrie des Radargerätes errechnet bzw. vorgegeben. Parameter für diese Berechnung bzw. Vorgabe sind die zu vermessenden Entfernungsintervalle, die Sendefrequenz, die Länge des rotierenden Armes, der Drehwinkelbereich der Antenne aus dem Signale rückempfangen werden, die Anzahl der Sendeimpulse sowie die Höhe der rotierenden Antenne über Grund. Das Korrelationsergebnis wird in geeigneter Weise, z.B. auf einem Monitor, angezeigt. Ein derartiges Radargerät kann in Echtzeitnähe im On-line-Betrieb eingesetzt und somit etwa neben der Karthographie und der Hinderniswarnung auch der Zielaufklärung und der Zielverfolgung dienen. Der Prozessor dieses bekannten ROSAR-Gerätes weist mehrere Bausteine auf, um die vielfältigen und komplexen Rechenaufgaben zu unterteilen und dadurch die Echtzeitnähe bzw. den On-Line-Betrieb zu ermöglichen.

Bei diesem bekannten Gerät wird das Ergebnis für jedes Entfernungsintervall stets durch Korrelation des Empfangssignales mit einer für dieses Entfernungsintervall gültigen Referenzfunktion erhalten. Die Auflösung eines ROSAR-Gerätes in lateraler und radialer Richtung wird durch teilweise miteinander verkoppelte Parameter bestimmt, so durch die Wellenlänge $\lambda$ und die Länge $L$ des rotierenden Antennenarmes, durch den Öffnungswinkel der Antenne $\gamma$, die Entfernung $R_{G0}$ zwischen Antenne und Mittellinie des ausgeleuchteten Streifens, die Höhe $H_0$ der Antenne über Grund, Impulswiederholfrequenz $f_P$ und Dauer $\tau$ der Sendeimpulse und damit die Zahl $Z_S$ der Impulse pro Aperturlänge $S$, die Dauer $t_e$ des empfangenen Echosignales, die Abtastrate für die Entfernungsintervalle etc..
Strenggenommen müßte für jeden Objektpunkt in radialer Richtung eine eigene Referenzfunktion berechnet und das Empfangssignal mit dieser korreliert werden. Dies ist schon aus Gründen der nicht unbegrenzt vorhandenen Rechenkapazität unmöglich, so daß in der oben genannten DE-PS 39 22 086 die berechneten Referenzfunktionen jeweils für ein Entfernungsintervall verwendet werden, wobei dann diese Referenzfunktionen strenggenommen nur für Objektpunkte auf der Mittellinie des entsprechenden Entfernungsintervalles gültig sind. Die Korrelation des Empfangssignales aus diesem Entfernungsintervall erfolgt somit unter Inkaufnahme eines Phasenfehlers. Diese Unschärfe kann zwar durch Wahl entsprechender kleiner Entfernungsintervalle klein gehalten werden, wodurch jedoch die Rechenkapazität wieder größer sein muß.

Der Erfindung liegt die Aufgabe zugrunde, ein ROSAR-Gerät der in Rede stehenden Art so weiterzuentwickeln, daß die Abbildungsfehler mit einfachen Mitteln kleingehalten werden. Diese Aufgabe ist gemäß der Erfindung durch die im kennzeichnenden Teil des Patentanspruches 1 angegebenen Merkmale gelöst.
Demgemäß wird die Prozessorschaltung um einen zusätzlichen Baustein erweitert, in dem der gültige Tiefenschärfebereich berechnet wird.
Die Berechnung der Tiefenschärfe kann dann zur Vereinfachung des Rechenvorganges herangezogen werden. Die Tiefenschärfe gibt die Häufigkeit einer Neuberechnung der Referenzfunktionen über der abzubildenden Streifenbreite der einzelnen Entfernungsintervalle an.

Die Tiefenschärfe bestimmt denjenigen Bereich, an dessen Rändern zwei Objekte noch ausreichend scharf abgebildet werden. Dieser Bereich kann durch die Entfernungen $R_{G01}$ bzw. $R_{G02}$ an den Grenzen mathematisch angegeben werden zu

$$\Delta R_{G0V} = R_{G02} - R_{G01},$$

wobei für diesen Bereich eine maximale Phasendifferenz von $\pi/4$ entsprechend einer Wegdifferenz von $\lambda/8$ zulässig ist. Diese Beziehung kann als Funktion des Öffnungswinkels der Antenne $\gamma$ und deren Höhe $H_0$ über Grund berechnet werden. Da hier nicht mit den entsprechenden Entfernungszellen gerechnet wird, entfällt der Laufindex $n$; statt dessen wird mit $R_{G01}$ und $R_{G02}$ gerechnet.
Mit der Erfindung wird nun vorgeschlagen, einen zusätzlichen Speicherbaustein vorzusehen, in dem die Tiefenschärfe für verschiedene Werte der Parameter $\gamma$ und $H_0$ als Funktion derjeweiligen Entfernung $R_{G01}$ gespeichert ist. Die gespeicherten Werte können dann dazu benutzt werden, anhand der tatsächlichen Gegebenheiten, insbesondere der Höhe der Antenne über Grund und dem Depressionswinkel, d.h. dem Blickwinkel der Antenne in Richtung auf den Boden, den zugehörigen Tiefenschärfebereich abzurufen und der Prozessorschaltung für die Unterteilung des beleuchteten Bereiches in einzelne Entfernungsintervalle und damit für die Unterteilung der Referenzfunktionen zuzuführen. Die Speicherung von vorgegebenen Tiefenschärfebereichen hat den Vorteil, daß eine Berechnung dieser Tiefenschärfebereiche in Echtzeit nicht notwendig ist, da zudem diese Berechnung recht aufwendig ist.

Die Erfindung ist in einem Ausführungsbeispiel anhand der Zeichnung näher erläutert. In dieser stellen dar:

Fig. 1 ein Blockschaltbild eines Prozessors eines ROSAR-Gerätes gemäß der Erfindung;

Fig. 2 ein Diagramm der Tiefenschärfe in Abhängigkeit der Objektentfernung $R_{G01}$ mit dem Öffnungswinkel der Antenne $\gamma$ als Parameter für eine Höhe $H_0$ der Antenne von 100 m über Grund;

Fig. 3 ebenfalls ein Diagramm der Tiefenschärfe für eine Höhe $H_0$ der Antenne von 1000 m über Grund und

Fig. 4 ein Blockschaltdiagramm für den geschlossenen Weg zur Berechnung der Tiefenschärfe;

Fig. 5 ein Schemadiagramm für die Berücksichtigung der Tiefenschärfe mit offener und geschlossener Lösung;

Fig. 6 ein Diagramm dreier Ergebnisfunktionen für einen Öffnungswinkel der Antenne $\gamma$ von 90° für verschiedene, maximale zugelassene Phasenfehler.

In Fig. 1 ist ein Schaltbild eines Prozessors für ein ROSAR-Gerät gezeigt, wobei in der oberen Hälfte des Blockschaltbildes entsprechend einem ersten Kanal diejenigen Bausteine dargestellt sind, die zur Erzeugung der Referenzfunktionen notwendig sind, und in der unteren Hälfte entsprechend einem zweiten Kanal diejenigen Bausteine, die dem Empfang der am Boden reflektierten Signale dienen.

Im ersten Kanal ist ein Geometriebaustein 1 vorgesehen, der anhand der Höhe $H_0$ der Antenne über Grund und anderer Parameter, insbesondere dem Depressionswinkel, dem Inklinationswinkel und der Länge des Rotorarmes, verschiedene Größen und Funktionen berechnet, die einer Prozessorschaltung 2 zum Aufteilen des ausgeleuchteten Gebietes in einzelne Entfernungsintervalle zugeführt werden. Diese Prozessorschaltung 2 ist mit einem Prozessorbaustein 3 verbunden, in dem anhand der Ausgangssignale der Prozessorschaltung 2 die Referenzfunktionen für die einzelnen Entfernungsintervalle berechnet werden. Die für die Korrelation notwendigen Referenzfunktionen werden in einen Speicher 4 übertragen.

Im zweiten Kanal wird das Empfangssignal $S_E$ einem Quadraturdemodulator 5 zugeführt und in die Inphase- und Quadraturkomponente $I_E$ bzw. $Q_E$ zerlegt. Die beiden Komponenten werden in Zwischenspeicher 6 bzw. 7 übernommen und für die Korrelation in einen Speicher 8 übertragen. Die jeweils in den Speichern 4 bzw. 8 abgelegten Signale werden synchron einem Korrelator 9 zugeführt und korreliert. Das Korrelationsergebnis wird an einer Anzeige, z.B. einem Monitor 10, dargestellt und/oder weiter einem Auswertegerät 11 zugeführt. Hinsichtlich der näheren Funktion, insbesondere hinsichtlich der Aufteilung der Referenzfunktionen auf einzelne Entfernungsintervalle und deren Berechnung wird auf die oben genannte DE-PS 39 22 086 verwiesen.

Zusätzlich zu den beschriebenen Prozessorbausteinen ist noch ein Tiefenschärfebaustein 12 vorgesehen. Dem Tiefenschärfebaustein 12 werden ebenfalls mehrere Parameter zugeführt, insbesondere die Höhe $H_0$ der Antenne über Grund, die jeweilige Zielentfernung $R_{G01}$ und der Öffnungswinkel der Antenne $\gamma$. Aus diesen Größen wird unter Zuhilfenahme von weiteren Hilfsgrößen der Tiefenschärfebereich $\Delta R_{G0V}$ dem Speicher entnommen und den Prozessorschaltungen 2 und 3 zugeführt. Die Tiefenschärfe wird somit in diesem Baustein 12 nicht jedesmal explizit berechnet; zur Berechnung wird auf das Buch von Herrn Dr.-Ing. Helmut Klausing "Realisierbarkeit eines Radars mit synthetischer Apertur durch rotierende Antennen", MBB-Publikation, MBB-UA-1150-89-Pub = OTN-029299, 1989, Seite 56-62, verwiesen.

In den Fig. 2 und 3 ist die Tiefenschärfe für Höhe $H_0$ der Antenne über Grund von 100 m bzw. 1000 m angegeben, und zwar für unterschiedliche Öffnungswinkel der Antenne $\gamma$ in Azimut. Wie ersichtlich, nimmt die Steilheit der Kurven ab einem gültigen Tiefenschärfebereich von etwa 1000 m in starkem Maße zu, wobei jedoch aufgrund verschiedener Arten von zusätzlichen Systemfehlern, z.B. Phasenfehlern oder zusätzlichen statistischen Fehlern, die Ausnutzung des gesamten Tiefenschärfebereiches nicht sinnvoll ist. Bei der anschließenden Signalverarbeitung müssen die Einflüsse zusätzlicher Phasenfehler ggf. überprüft und die Intervalle einer Neuberechnung der Referenzfunktion innerhalb des gültigen Tiefenschärfebereiches endgültig festgelegt werden. Die gestrichelten Kurven in Fig. 3 entsprechen einer exakten Berechnung der Tiefenschärfe, wohingegen die anderen Linien durch Iterationsverfahren mit einer vorgegebenen Genauigkeit erzielt wurden. Die Werte der Tiefenschärfen für unterschiedliche Höhen $H_0$ sind in dem Baustein 12 abgespeichert. Aufgrund der Eingangsdaten dieses Bausteines 12 kann direkt auf den zur Zeit gültigen Tiefenschärfebereich zugegeriffen werden, wobei dann für einen festen Öffnungswinkel der Antenne $\gamma$ die Kurvenschar eine Funktion der Höhe $H_0$ und der Entfernung $R_{G01}$ ist.

Die Betrachtung der Tiefenschärfebedingung kann grundsätzlich in zwei Arten der Signalverarbeitung aufgeteilt werden:

1. Der gültige Tiefenschärfebereich umfaßt mehrere Entfernungsintervalle: In diesem Falle können mit einer einzigen Referenzfunktion die Empfangssignale aus mehreren Entfernungsintervallen korreliert werden. Dadurch wird die Rechengeschwindigkeit erheblich gesteigert, da nicht für jedes Entfernungsintervall eine eigene Referenzfunktion erzeugt werden muß.

2. Der gültige Tiefenschärfebereich ändert sich innerhalb eines einzigen Entfernungsintervalles:
Wie oben erläutert, wird für ein Entfernungsintervall die zugehörige Referenzfunktion immer für Objektpunkte auf der Mittellinie des entsprechenden Entfernungsintervalles berechnet. Die Korrelation des Empfangssignales erfolgt somit unter Inkaufnahme eines Fehlers. Im Nahbereich steigt die Tiefenschärfe beim ROSAR in Abhängigkeit der Höhe und Entfernung nur langsam an, was zur Folge hat, daß die Tiefenschärfebedingung innerhalb eines Entfernungsintervalles die Erzeugung mehrerer Referenzfunktionen vorschreibt, wenn man bei der Korrelation die Phasenfehler gering halten will.

Zur Zielaufklärung am Boden und Geländeabbildung von einem Hubschrauber aus ist zur Einhaltung einer vorgegebenen Radialauflösung am Boden $\Delta R_{B\min}$ für eine vorgegebene Einsatzhöhe ein Mindestabstand zum Objekt als Funktion des Depressionswinkels erforderlich. Damit kommt dieser Bereich der Tiefenschärfekurve in der Praxis praktisch nicht vor.
Anders ist es beim Hinderniswarnradar mit radialer Abstrahlung, wobei die Flughöhe oft gering ist; auch sind hier kurze Reichweiten bis einige 100 m gefragt. Gerade im Entfernungsbereich bis 50 m bzw. 100 m ist es absolut erforderlich, etwa Drähte und gespannte Seile, die zudem schwer zu detektieren sind, als Hindernis zu erkennen. Dazu kommt, daß die Tiefenschärfe geringer als die Tiefe des Entfernungsintervalles ist und damit die Notwendigkeit besteht, die Referenzfunktion innerhalb eines einzigen Entfernungsintervalles mehrfach als Funktion der Tiefenschärfe zu erzeugen. Dementsprechend wird bei solchen Bedingungen der Baustein 12 in die entsprechenden Schaltungselemente 2 und 3 der Prozessorschaltung eingreifen.
Die Neuberechnung der Referenzfunktionen innerhalb eines Entfernungsintervalles als Funktion der Tiefenschärfe kann auch dazu benutzt werden, um kleine Objekte, so z.B. Drähte oder gespannte Seile, optimal zu detektieren. Dazu werden für ein Entfernungsintervall mehrere Korrelationen zwischen dem zugehörigen Empfangssignal und verschiedenen, über das Entfernungsintervall gültigen Referenzfunktionen durchgeführt. Die Anzahl der Referenzfunktionen wird anhand des Speicherbausteines 12 festgelegt. Als Ergebnis entstehen mehrere Korrelationsfiguren verschiedener Auflösung, je nachdem, ob ein Objekt am Anfang oder am Ende eines Entfernungsintervalles liegt und auch dort detektiert und abgebildet wird. Die Korrelationsergebnisse werden dann innerhalb eines Entfernungsintervalles gemittelt. wodurch kleine Hindernisse, wie die angesprochenen Drähte, Seile, etc., optimal detektiert werden. Ohne Mittelung werden durch die Aufteilung eines Entfernungsintervalles in mehrere Bereiche entsprechend den Vorgaben des Speicherbausteines 12 sämtliche Objekte mit der geforderten Auflösung erfaßt.
Neben dieser vereinfachten oder offenen Lösung ist es vorteilhaft, gleichzeitig auch einen geschlossenen Lösungsweg zur Berechnung der Tiefenschärfe anzugeben.
Für die geschlossene Lösung zur Berechnung der Tiefenschärfe kann mit einer maximal zulässigen Winkeldifferenz $\Delta\alpha_{Diff}$ (Winkelfehler) zwischen dem maximal möglichen Drehwinkel $\tilde{\alpha}_{max} = \frac{\gamma}{2}$ und dem tatsächlichen maximalen Drehwinkel

$$\alpha_{max} = \frac{\gamma}{2} \cdot \left(1 - \frac{L}{R_{G01}}\right)$$

als Funktion des Öffnungswinkels der Antenne $\gamma$, der Rotorblattlänge L und der Entfernung zum Objekt $R_{G01}$ berechnet werden, ab welcher das vorgegebene $\Delta\alpha_{Diff}$ eingehalten wird. Es gilt:

$$\tilde{\alpha}_{max} - \alpha_{max} \leq \Delta\alpha_{Diff}.$$

Daraus folgt für den einzuhaltenden Mindestabstand $R_{G0min}$:

$$\frac{\gamma}{2} - \frac{\gamma}{2} \cdot \left(1 - \frac{L}{R_{G0min}}\right) \leq \Delta\alpha_{Diff}.$$

Aus dieser Ungleichung läßt sich die Mindestentfernung $R_{G0min}$ bestimmen:

$$R_{G0min}=\frac{\gamma\cdot L}{2\cdot\Delta\alpha_{Diff}}.$$

Ab dieser Entfernung kann auf jeden Fall der geschlossene Lösungsweg zur Berechnung der Tiefenschärfe verwendet werden.
Gesucht wird bei einer vorgegebenen Entfernung am Boden $R_{G01}$ und der Einsatzhöhe $H_0$ diejenige Entfernung $R_{G02}$, welche die Grenze des Ablagebereiches darstellt. Es gilt für die maximal zulässige Differenz der Entfernung an den Rändern der synthetischen Apertur:

$$\Delta R_{2max}-\Delta R_{1max}=\frac{\lambda}{8}$$

mit

$$\Delta R_{1max}=\sqrt{L^2+R_{G01}^2-2\cdot L\cdot R_{G01}\cdot\cos\gamma/2+H_0^2}-\sqrt{(R_{G01}-L)^2+H_0^2}$$

und

$$\Delta R_{2max}=\sqrt{L^2+R_{G02}^2-2\cdot L\cdot R_{G02}\cdot\cos\gamma/2+H_0^2}-\sqrt{(R_{G02}-L)^2+H_0^2}$$

wobei die hier angenommenen Vereinfachungen

$$\alpha_{1max}\approx\alpha_{2max}\approx\alpha_{max}\approx\frac{\gamma}{2}$$

bereits verwendet wurden.

Zur weiteren Berechnung werden folgende Festlegungen eingeführt:

$$A_1:=\sqrt{L^2+R_{G01}^2-2\cdot L\cdot R_{G01}\cdot\cos\gamma/2+H_0^2}\ ,$$

$$B_1:=\sqrt{(R_{G01}-L)^2+H_0^2},$$

$$2C_1:=(A_1-B_1)^2+\frac{\lambda}{4}\cdot(A_1-B_1)+\frac{\lambda^2}{64}.$$

wobei $A_1$ die Entfernung zwischen der Rotorspitze und einem Objekt am Boden und $B_1$ die Entfernung zwischen Rotorspitze und dem Objekt am Boden bei $\alpha = 0°$ ist.

Es folgt die Normalform der quadratischen Gleichung zur Berechnung von $R_{G02}$ dann zu:

$$R_{G02}^2+\frac{2C_1\cdot L\cdot\left(\cos\frac{\gamma}{2}+1\right)}{L^2\cdot\left(\cos\frac{\gamma}{2}+1\right)^2-4\cdot L^2\cdot\cos\frac{\gamma}{2}-2C_1}\cdot R_{G02}+\frac{C_1^2-2C_1\cdot(L^2+H_0^2)}{L^2\cdot\left(\cos\frac{\gamma}{2}+1\right)^2-4\cdot L^2\cdot\cos\frac{\gamma}{2}-2C_1}=0.$$

Mit

$$D := \frac{2C_1 \cdot L \cdot \left(\cos\frac{\gamma}{2}+1\right)}{L^2 \cdot \left(\cos\frac{\gamma}{2}+1\right)^2 - 4 \cdot L^2 \cdot \cos\frac{\gamma}{2} - 2C_1}$$

und

$$E := \frac{C_1^2 - 2C_1 \cdot (L^2 + H_0^2)}{L^2 \cdot \left(\cos\frac{\gamma}{2}+1\right)^2 - 4 \cdot L^2 \cdot \cos\frac{\gamma}{2} - 2C_1}$$

folgt die Lösung der quadratischen Gleichung nach $R_{G02}$:

$$R_{G02} = -\frac{D}{2} + \sqrt{\left(\frac{D}{2}\right)^2 - E}.$$

Diese Gleichung erfüllt die physikalischen Randbedingungen.
**Die zulässige Tiefenschärfe berechnet sich nun zu**

$$\Delta R_{G0V} = R_{G02} - R_{G01}.$$

In Fig. 4 sind die einzelnen Rechenbausteine für die obigen Ausdrücke angegeben. Dieses sind: ein Entfernungsbaustein 41 zum Vorgeben der Entfernung $R_{G01}$, ein Rechenbaustein 42 zum Berechnen der obigen Ausdrücke $A_1$ und $B_1$, ein weiterer Rechenbaustein 43 zum Berechnen der Größe $C_1$ aus den Größen $A_1$ und $B_1$. In einem weiteren Rechenbaustein 44 werden aus der Größe $C_1$, der Höhe $H_0$ der Antenne über Grund, der Länge des Rotorblattes $L$ und dem Öffnungswinkel der Antenne $\gamma$ die Größen $D$ und $E$ berechnet, aus denen in einem weiteren Baustein 45 dann die Randbedingung für die Tiefenschärfe aus der Berechnung von $R_{G02}$ bestimmt wird. Aus dieser Größe und der Größe $R_{G01}$ wird in einem Komparator 46 die zulässige Tiefenschärfe $\Delta R_{G0V}$ bestimmt, wonach in einem Dividierbaustein 47 aus dieser zulässigen Tiefenschärfe und der Radialauflösung $\Delta R_{B\min}$ die Anzähl $n^*$ der Entfernungszellen bzw. Entfernungsintervalle bestimmt wird, für die die gleiche Referenzfunktion verwendet wird.
In Fig. 5 ist ein Schemadiagramm für die Bearbeitung der Signale mit dem jeweils richtigen Tiefenschärfebereich bzw. der entsprechenden Referenzfunktion gezeigt. In einem ersten Entfernungsbaustein 51 wird aus den Werten $\gamma$, $L$ und $\Delta\alpha_{Diff}$ die Mindestentfernung $R_{G0\min}$ berechnet. Aus einem Vergleich in einem Komparator mit dem Wert für $R_{gn}$ wird festgestellt, ob dieser Wert größer oder kleiner ist. Ist der Wert $R_{gn}$ größer, dann erfolgt eine Berechnung mit Hilfe des geschlossenen Lösungsweges in der Schaltung 53, die derjenigen nach Fig. 4 entspricht. Ist hingegen $R_{G0\min}$ größer als $R_{gn}$, dann wird der oben erwähnte Weg verfolgt, in dem der jeweilige Tiefenschärfebereich aus einem Speicher 54 entnommen wird. Je nach der Bedingung, die aus dem Vergleich in dem Komparator 52 folgt, wird nun die Referenzfunktion in einer Rechenschaltung entsprechend der oben erwähnten gebildet.
In Fig. 6 sind mehere Ergebnisfunktionen bei einem Öffnungswinkel der Antenne $\gamma$ von 90° dargestellt. Die durchgezogene Linie entspricht der exakten Lösung die beiden gestrichelten Kurven entsprechen den Lösungen mit Tiefenschärfenbereichen, bei denen ein Phasenfehler von $\pi/4$ bzw. $\pi/2$ zugelassen wurde. Wenn in bestimmten Bereichen die Phasenfehler kleiner gehalten werden sollen, so ist es möglich, dann auf den erwähnten geschlossenen Lösungsweg umzuschalten.

## Patentansprüche

1. Radargerät mit zumindest einem Sender und einem Empfänger, denen zumindest eine Antenne zum Senden und Empfangen von Radarimpulsen am Ende eines rotierenden Armes zugeordnet ist, mit einer Einrichtung zum Demodulieren und Zwischenspeichern der Empfangssignale, mit Einrichtungen zum Bilden und Speichern von Referenzfunktionen in Abhängigkeit von der Beleuchtungsgeometrie des Radargerätes, der Sendefrequenz, der zu vermessenden Entfernungsintervalle, der Drehwinkelbereiche, der Sendeimpulse sowie der Höhe der rotierenden Antenne über Grund, mit einer Prozessorschaltung zum Aufteilen des von der Antenne ausgeleuchteten Entfernungsbereiches in einzelne Entfernungsintervalle und zum Festlegen der Referenzfunktionen in diesen Entfernungsintervallen, und mit einem Korrelator zum Korrelieren der Empfangssignale mit den Referenzfunktionen sowie einem Anzeigegerät für das Korrelationsergebnis, dadurch gekennzeichnet, daß die Prozessorschaltung eine Speicherschaltung (12) für die Tiefenschärfe aufweist und daß diese Schaltung mit der Prozessorschaltung (2,3) zum Aufteilen der Entfernungsintervalle und der Referenzfunktionen auf die Entfernungsbereiche einwirken.

**2.** Radargerät nach Anspruch 1, dadurch gekennzeichnet, daß in der Speicherschaltung (12) die Tiefenschärfe in Abhängigkeit der Höhe $H_0$ der Antenne über Grund sowie des Öffnungswinkels $\gamma$ der Antenne abgespeichert ist, und daß die gespeicherten Werte in Abhängigkeit der Höhe der Antenne über Grund und der Zielentfernung als Mittelpunkt eines Entfernungsbereiches zur Berechnung der Referenzfunktionen abrufbar sind.

**3.** Radargerät nach Anspruch 2, dadurch gekennzeichnet, daß dann, wenn der durch einen gespeicherten Wert der Tiefenschärfe festgelegte Entfernungsbereich mehrere Entfernungsintervalle überdeckt, für sämtliche dieser Entfernungsintervalle die gleiche Referenzfunktion verwendet wird, und daß dann, wenn der durch einen gespeicherten Wert bestimmte Entfernungsbereich kleiner als ein Entfernungsintervall ist, für dieses Entfernungsintervall entsprechend mehrere Referenzfunktionen verwendet werden.

**4.** Radargerät nach Anspruch 1 oder 2, dadurch gekennzeichnet, daß dann, wenn der durch einen gespeicherten Wert der Tiefenschärfe bestimmte Entfernungsbereich kleiner ist als ein Entfernungsintervall, innerhalb dieses Entfernungsintervalles die Empfangssignale mit mehreren Referenzfunktionen korreliert und die Korrelationsergebnisse gemittelt oder getrennt betrachtet werden.

**Claims**

**1.** A radar appliance having at least one transmitter and one receiver, with which at least one antenna is associated, at the end of a rotating arm, for transmitting and receiving radar pulses, having a device for the demodulation and temporary storage of received signals, having devices for forming and storing reference functions depending on the irradiation geometry of the radar appliance, on the transmission frequency, on the distance intervals to be measured, on the ranges of angular rotation, on the transmission pulses and on the height of the rotating antenna above ground, having a processor circuit for partitioning the range of distance irradiated by the antenna into individual distance intervals and for determining the reference functions in these distance intervals, and having a correlator for correlating the received signals with the reference functions and having a display unit for the correlation result, characterised in that the processor circuit comprises a memory circuit (12) for the depth of definition and that this circuit acts with the processor circuit (2,3) on the ranges of distance for the partitioning of the distance intervals and the reference functions.

**2.** A radar appliance according to claim 1, characterised in that the depth of definition is stored in the memory circuit (12) depending on the height $H_0$ of the antenna above ground and on the aperture angle y of the antenna, and that the stored values can be called up, depending on the height of the antenna above ground and on the distance of the target, as the mid-point of a range of distance for calculating the reference functions.

**3.** A radar appliance according to claim 2, characterised in that when the range of distance determined by a stored value of the depth of definition covers a plurality of distance intervals, the same reference function is used for all these distance intervals, and that when the range of distance determined by a stored value is less than a distance interval, a plurality of reference functions is correspondingly used for this distance interval.

**4.** A radar appliance according to claim 1 or 2, characterised in that when the range of distance determined by a stored value of the depth of definition is less than a distance interval, within this distance interval the received signals are correlated with a plurality of reference functions and the correlation results are averaged or considered separately.

**Revendications**

**1.** Appareil radar avec au moins un émetteur et un récepteur auxquels est associée au moins une antenne montée à l'extrémité d'un bras tournant, pour l'émission et la réception d'impulsions radar, avec un dispositif de démodulation et de mémorisation intermédiaire des signaux reçus, avec des dispositifs pour générer et mémoriser des fonctions de référence en relation avec la géométrie d'éclairement de l'appareil radar, la fréquence d'émission, l'intervalle de distance dans lequel la mesure est effectuée, les plages angulaires de rotation, les impulsions émises ainsi que la hauteur de l'antenne tournante par rapport au sol, avec un circuit de traitement pour diviser la plage de distances éclairée par l'antenne en intervalles de distance discrets et pour définir les fonctions de référence dans lesdits intervalles de distance, avec un corrélateur pour corréler les signaux reçus et les fonctions de référence ainsi qu'avec un appareil d'affichage du résultat de la corrélation, caractérisé en ce que le circuit de traitement présente un circuit de mémoire (12) pour la profondeur de champ et en ce que ledit circuit, avec le circuit de traitement (2, 3) pour créer les intervalles de distance et les fonctions de référence, agissent sur les plages de distances.

**2.** Appareil radar selon la revendication 1, caractérisé en ce que la profondeur de champ est mémorisée dans le circuit de mémoire (12) en relation avec la hauteur $H_0$ de l'antenne par rapport au sol et de l'angle d'ouverture $\gamma$ de l'antenne et en ce que les valeurs mémorisées peuvent être appelées en relation avec la hauteur de l'antenne par rapport au sol et de l'éloignement de la cible, en tant que centre d'une plage de distances, pour le calcul des fonctions de référence.

**3.** Appareil radar selon la revendication 2, caractérisé en ce que, lorsque la plage de distances définie par une valeur mémorisée de profondeur de champ couvre plusieurs intervalles de distance, on utilise la même fonction de référence pour tous les intervalles de distance et en ce que, lorsque la plage de distances définie par une valeur mémorisée de profondeur de champ est inférieure à un intervalle de distance, on utilise plusieurs fonctions de référence pour ledit intervalle de distance.

**4.** Appareil radar selon la revendication 1 ou 2, caractérisé en ce que, lorsque la plage de distances définie par une valeur mémorisée de profondeur de champ est inférieure à un intervalle de distance, on corrèle les signaux reçus avec plusieurs fonctions de référence à l'intérieur de cet intervalle de distance et on calcule la moyenne des résultats de la corrélation ou examine séparément lesdits résultats de la corrélation.

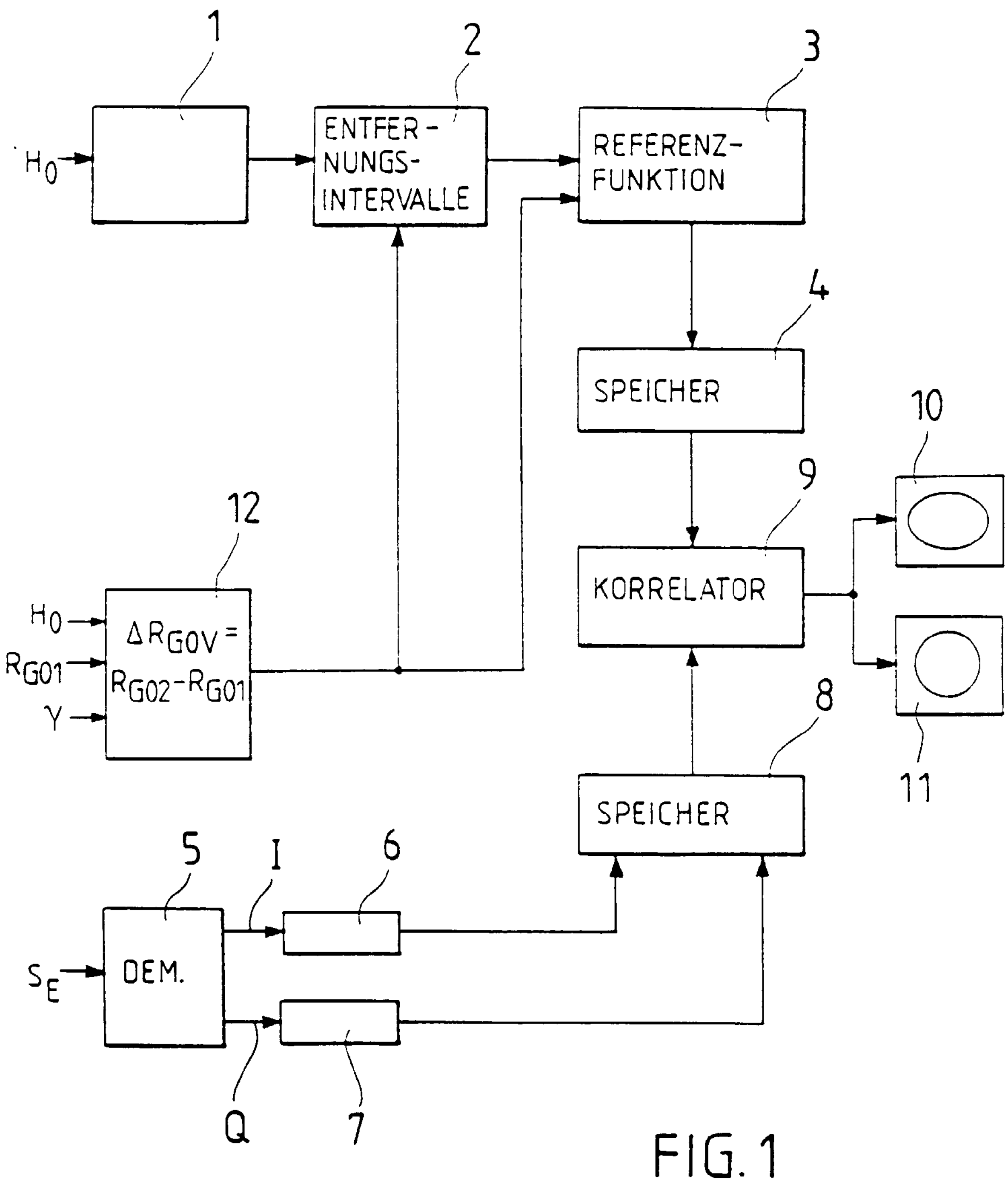
1
2
3
$H_0$
ENTFER-
NUNGS-
INTERVALLE
REFERENZ-
FUNKTION
4
SPEICHER
10
9
12
KORRELATOR
$H_0$
$R_{G01}$
$\gamma$
$\Delta R_{G0V} = R_{G02} - R_{G01}$
8
11
SPEICHER
5
I
6
$S_E$
DEM.
Q
7

FIG. 1

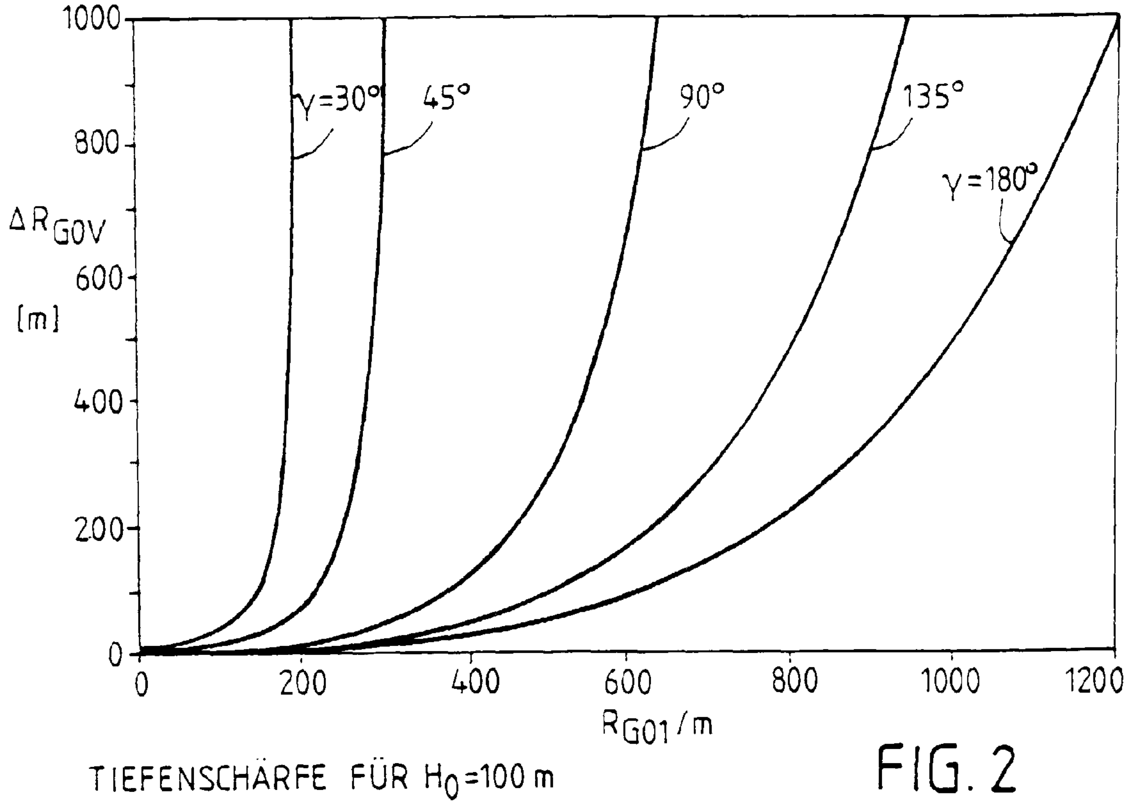


TIEFENSCHÄRFE FÜR $H_0$=100 m

FIG. 2

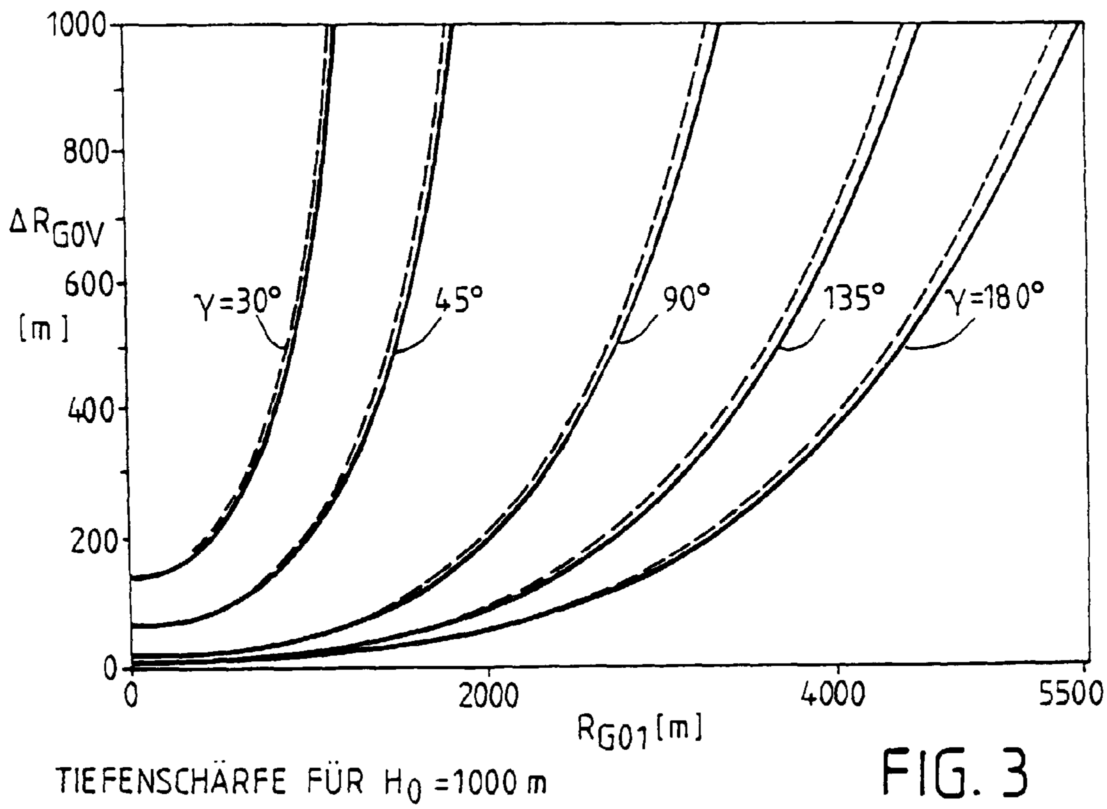


TIEFENSCHÄRFE FÜR $H_0$ =1000 m

FIG. 3

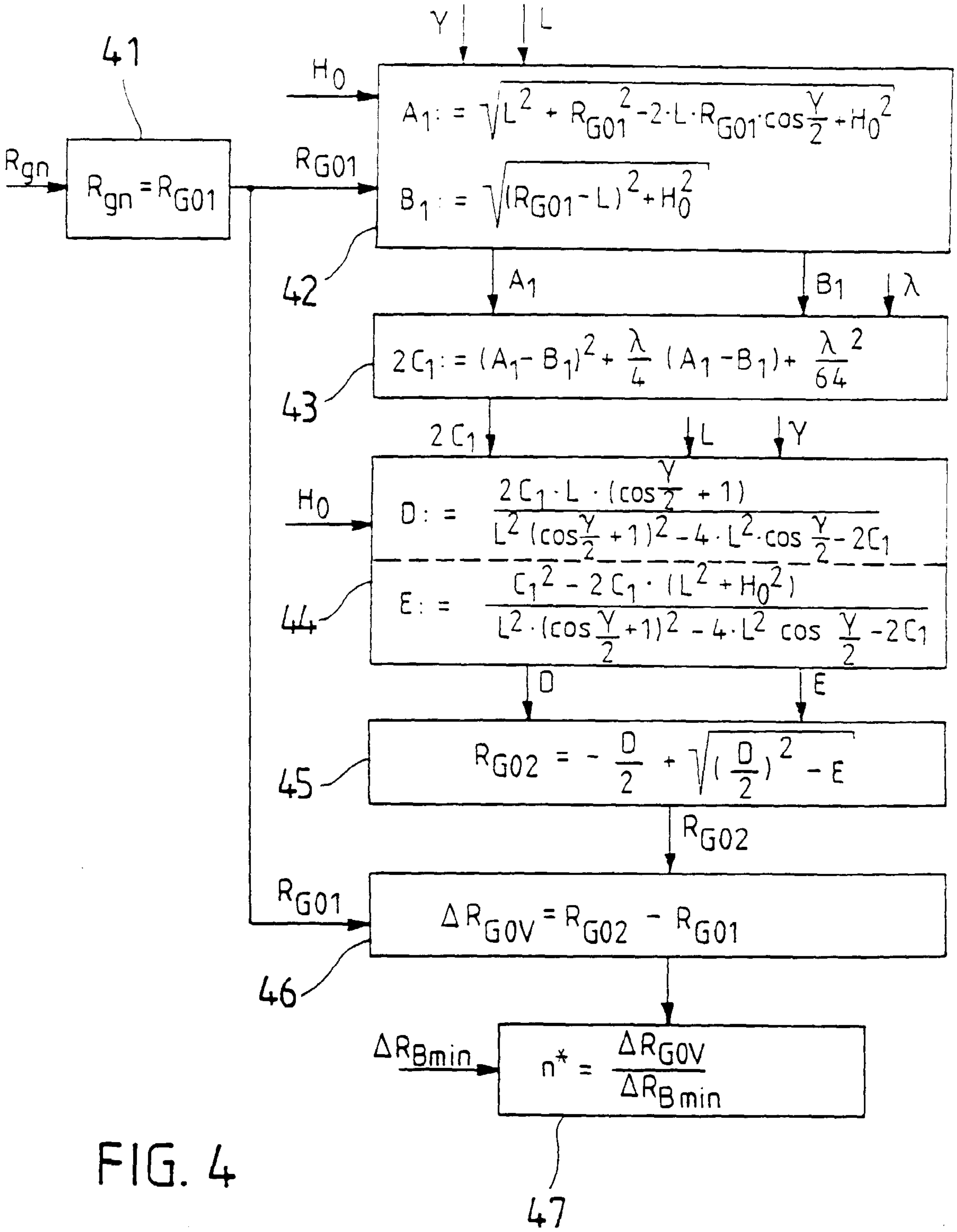
41
42
43
44
45
46
47
Rgn
Rgn = RG01
RG01
H0
γ
L
A1: = √(L² + RG01² - 2·L·RG01·cos γ/2 + H0²)
B1: = √((RG01 - L)² + H0²)
A1
B1
λ
2C1: = (A1 - B1)² + λ/4 (A1 - B1) + λ²/64
2C1
D: = 2C1·L·(cos γ/2 + 1) / (L²(cos γ/2 + 1)² - 4·L²·cos γ/2 - 2C1)
E: = (C1² - 2C1·(L² + H0²)) / (L²·(cos γ/2 + 1)² - 4·L² cos γ/2 - 2C1)
D
E
RG02 = - D/2 + √((D/2)² - E)
RG02
ΔRG0V = RG02 - RG01
ΔRBmin
n* = ΔRG0V / ΔRBmin

FIG. 4

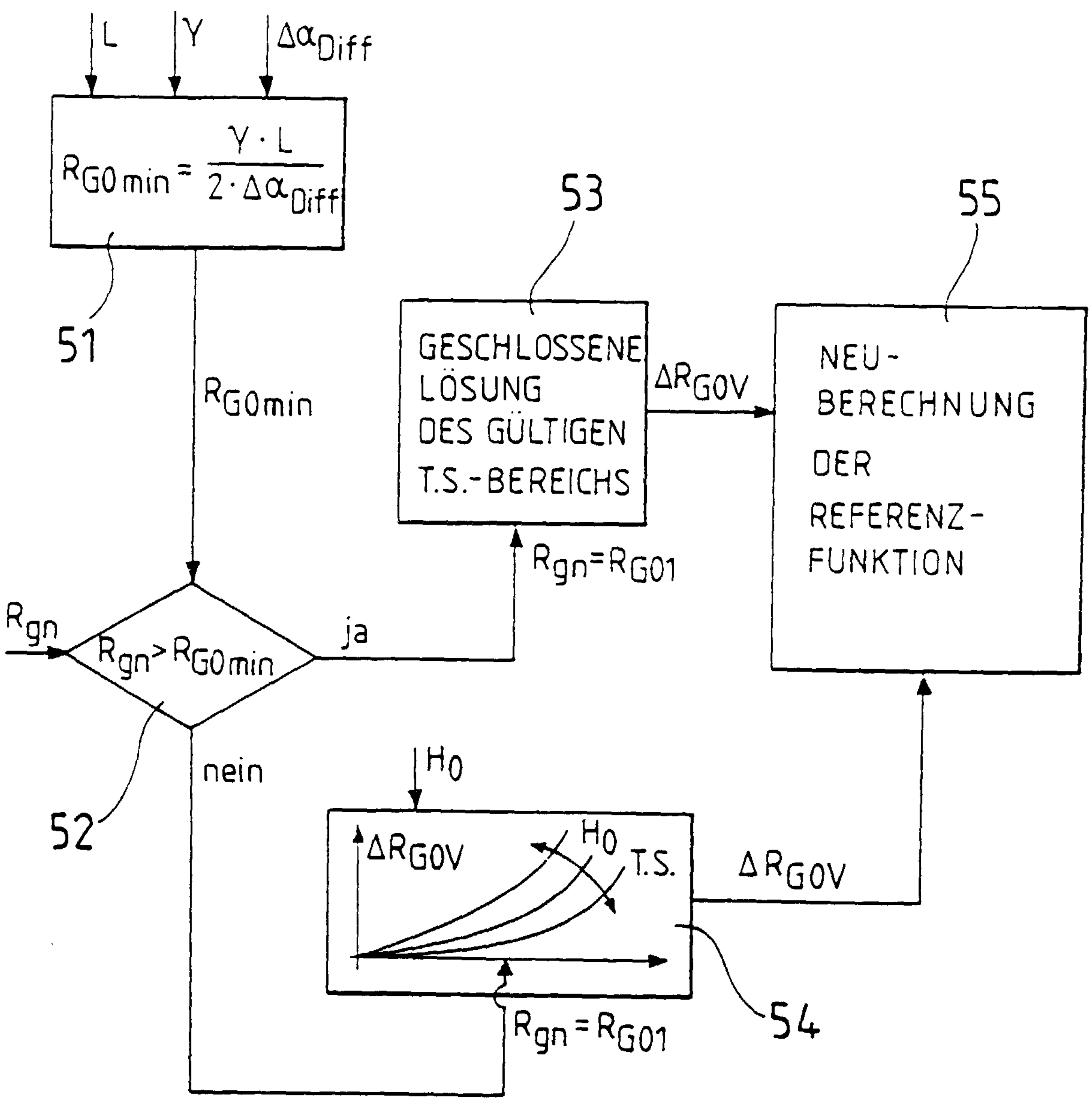
L
Y
$\Delta\alpha_{Diff}$
$R_{G0\,min} = \frac{Y \cdot L}{2 \cdot \Delta\alpha_{Diff}}$
51
$R_{G0min}$
53
55
GESCHLOSSENE
LÖSUNG
DES GÜLTIGEN
T.S.-BEREICHS
$\Delta R_{G0V}$
NEU-
BERECHNUNG
DER
REFERENZ-
FUNKTION
$R_{gn} = R_{G01}$
$R_{gn}$
$R_{gn} > R_{G0min}$
ja
52
nein
$H_0$
$\Delta R_{G0V}$
$H_0$
T.S.
$\Delta R_{G0V}$
54
$R_{gn} = R_{G01}$

FIG. 5

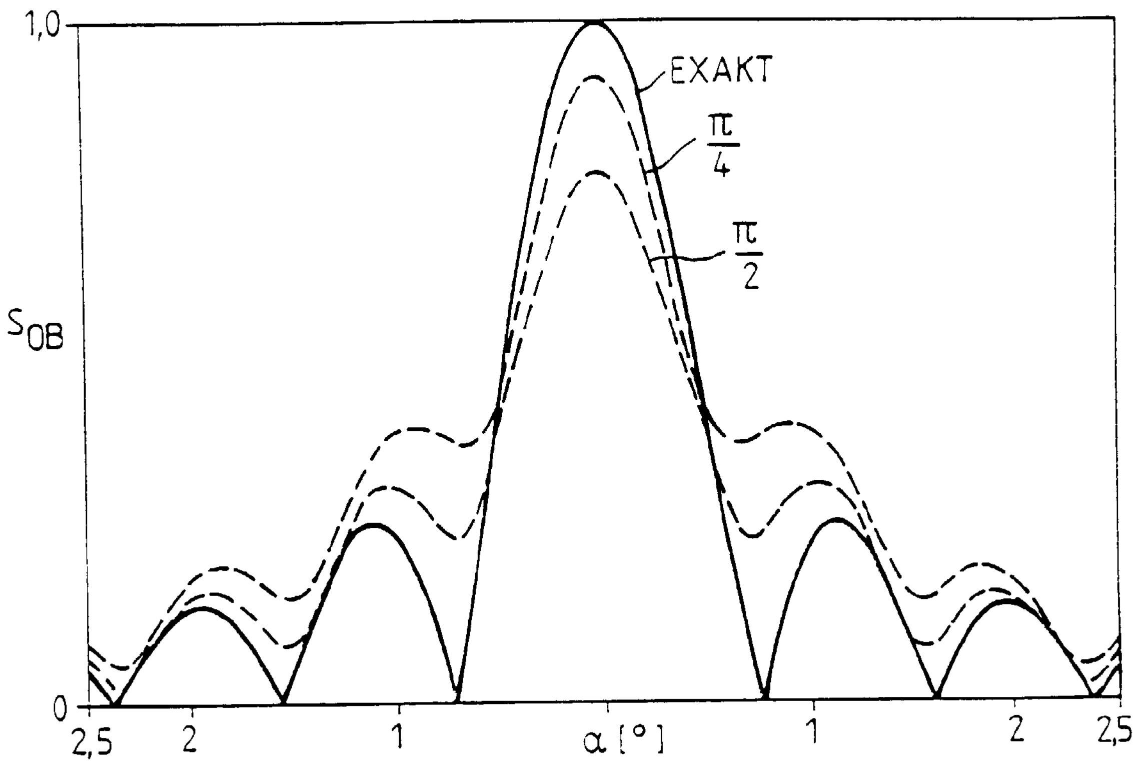


ERGEBNISFUNKTIONEN BEI γ=90°
UND VERSCHIEDENEN MAXIMAL ZUGELASSENEN
PHASENFEHLERN

FIG. 6